# EUROPEAN PATENT APPLICATION

(11) **EP 1 777 115 A2**
(43) Date of publication of application: **25.04.2007**
(21) Application number: 06017621.1
(22) Date of filing: 24.08.2006
(51) Int. Cl.: B60R 13/02

(54) **Method of making a decorative member for a vehicle component**

(30) Priority: 24.10.2005 US 256515
(71) Applicant: KEY SAFETY SYSTEMS, INC., Sterling Heights, MI 48314 (US)
(72) Inventor: Xu, Xiaoping, Rochester Hills, Michigan 48306 (US); Spencer, Byron, Bloomfield, Michigan 48301 (US)
(74) Representative: Gislon, Gabriele

(57) **Abstract**

A method of making a decorative member for a vehicle component comprises the steps of: (a) making a decorative member as a subassembly (10, 40) of a vehicle component by: (i) forming a pliable component (12) comprising leather, simulated leather or a leather equivalent to a predetermined shape; (ii) attaching one or more decorative components (15, 30) to the pliable component (12); and (iii) securing the pliable component (12) to a decorative component (15, 30) prior to attaching the subassembly (10, 40) to an underlying structure of a vehicle component such as the rim of a steering wheel (2).

## Description

This invention relates to a method of making a decorative outer wrap for a motor vehicle component, the motor vehicle component being in the passenger compartment of the motor vehicle.

The passenger compartments of motor vehicles commonly contain components such as a steering wheel assembly, gear shift, door paneling, windows, visors, dash, center console and even seats can decorated with leather appointments or simulated leather or leather equivalents. In combination with leather it is often desirable to provide other decorative elements either embedded in the leather or on the surface of the leather. Often the decorative elements are wood, wood grain or wood simulated plastic components that have a wood grain pattern painted or printed thereon. Alternatively the decorative component can be hard lacquer painted or chrome plated.

In US 2002/0017157 A1 and US 2002/0026850 A1 a steering wheel is provided with a decorative element in combination with an outer leather wrap. These components while providing the necessary appeal are assembled on the steering wheel rim at the time of final assembly. The steering wheel armature has a center hub and several spokes extending from the hub and contacting an annular rim. The rim is generally coated with a soft polyurethane material that provides a comfortable feel to the driver. The soft polyurethane material while providing a very comfortable feel also provides a surface that makes it difficult to wrap the leather component to the extent that it does not provide a rigid surface that leather can be forcibly stretched upon. The soft polyurethane material tends to deform locally in any location subject to force or pressure. This is particularly true in these prior art patents wherein the assembly is done at the final stage and the components are all applied directly onto the soft polyurethane coated rim of the steering wheel. Once assembled the rim and leather components are affixed thereto in such a fashion that should there be any damage or nick to the leather or to the decorative component the entire steering wheel assembly could be lost including the expensive armature. It is desirable that when these assemblies are done they are in a state where the outer wrapping and decorative component are at minimal risk to damage or scratching prior to assembly unlike the prior art.

A second and equally important problem associated with the assembly of decorative components onto steering wheels coated with polyurethane is that the leather is being stretched around the components creating a large crevice. The crevice is generally at the interface of the edge of the decorative component and the leather. Attempts to retain the leather provide a reasonable way of assembly, however, they provide no way of ensuring that the crevice is minimized. While the crevice may seem of nominal interest at the time of assembly, during use it is a location where oil, grease and grit from the driver's hands and any other dirt can get caught leaving a very distinctive line of debris within the crevice. In the prior art the radius of curvature of the leather adjacent a decorative component is substantially greater than 2 mm. The crevice created by this radius of curvature is unfortunate, but has been accepted in the industry as unavoidable. The present invention provides an intermediate article of manufacture that can be pre-assembled, stored and subsequently at the last stage of final assembly be attached to a steering wheel, a gear shift or other component in such a fashion that should there be any defects in the subassembly the entire final assembly does not have to be discarded. The present invention further provides a more secure way of retaining the decorative element while improving the appearance at the interface and along the edges of the decorative component.
Fig. 1 is an exploded view of a subassembly according to the invention.
Fig. 2 is a top perspective view of the assembled subassembly of Fig. 1.
Fig. 3 is a bottom perspective view of the assembled subassembly of Fig. 1.
Fig. 4 is the assembled subassembly of Fig. 1 prior to being wrapped around a steering wheel rim.
Fig. 5 shows a steering wheel with two of the subassemblies of Fig. 1.
Fig. 6 is a cross-section of the steering wheel rim having and subassembly.
Fig. 7 is an exploded view of a second embodiment of the invention.
Fig. 8 is a top perspective view of the subassembly of Fig. 7.
Fig. 9 is a bottom perspective view of the subassembly of Fig. 7.
Fig. 10 is the assembled subassembly of Fig. 7 prior to being wrapped around a steering wheel rim.
Fig. 11 shows a steering wheel with two of the subassemblies of Fig. 7.
Fig. 12 is a cross-section at line 12-12 of Fig. 11.
Figs. 13 - 23 show various means of attaching a subassembly of the present invention and fixing the subassembly to a steering wheel rim.
Fig. 24 shows a steering wheel with a subassembly of the invention with a 360-degree decorative element overlay on the rim.
Fig. 25 shows a steering wheel with two subassemblies, one at the top of the steering wheel and one at the bottom of the steering wheel.
Fig. 26 shows two of the subassemblies of Fig. 7 fixed to a steering wheel.
Fig. 27 shows a subassembly according Fig. 1 fixed on the rim and the spokes of the steering wheel.

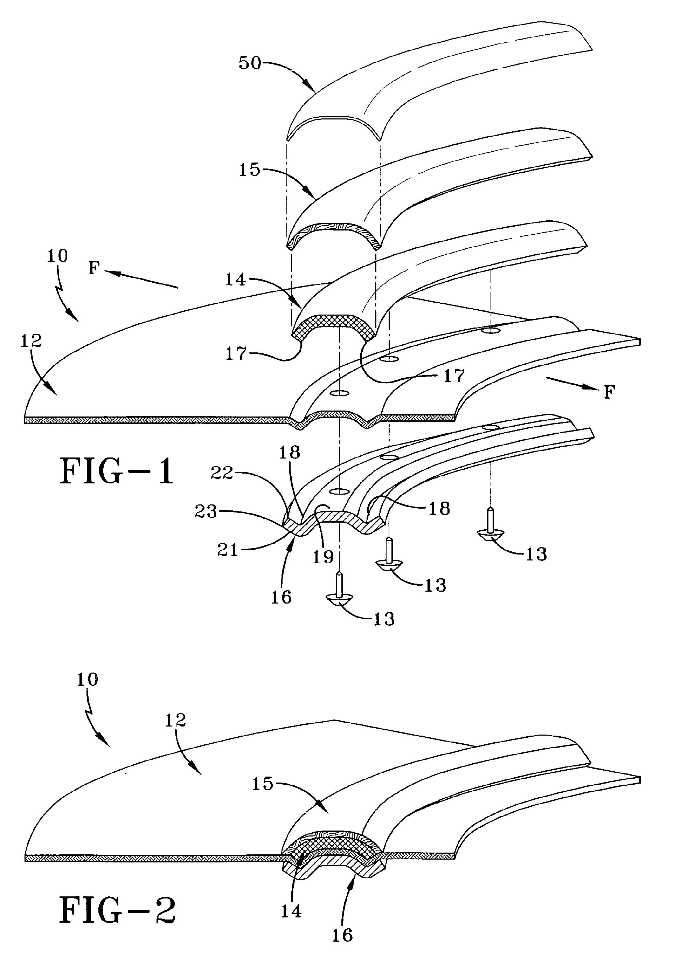

In Fig. 1 an intermediate article of manufacture forming an outer wrap subassembly 10 for mounting onto a steering wheel is shown. The subassembly 10 has a width sufficient to cover only a portion of an outer rim of a steering wheel. Subassemblies 10 can cover only a small arcuate section of a steering wheel or the subassembly can cover the entire circumference of a steering wheel rim. The leather, simulated leather or leather equivalent pliable component 12 is shown between the outer base structure 14 and the underlying locking structure 16. As used herein, the leather, simulated leather or leather equivalent pliable component 12 may simply be referred to as a pliable component 12. As used herein and in the claims the term "pliable" is understood to have its ordinary meaning as an adjective identifying a material as capable of being bent, shaped or flexed or twisted without breaking or tearing. Generally the thickness of the pliable component 12 is about 1.2 mm but can be greater depending on the application.

The outer base structure 14 can have an outer decorative layer 15 made of wood, veneer, printed pattern or simulated wood grain or any other decorative feature applied to it. This can be done either by painting a design directly onto the outer base structure 14 or having the outer decorative layer 15 affixed to the base structure 14. In cases where the decorative layer 15 is painted, printed or otherwise applied as a coating on the surface of the outer base structure 14 the outer base structure 14 can be considered to be the decorative component for the purposes of the invention. In the illustrated exemplary embodiments the decorative layer 15 is shown as a separate element that is bonded or otherwise adhered to the outer base structure 14, however, those skilled in the art will appreciate the outer surface of the base structure 14 can be the decorative layer 15 such that it is integral to the component 14. Covering the decorative layer or surface 15 is a protective film 50. The protective film 50 protects the decorative component 15 from scratches and scuffs during assembly and shipping and can be removed when the motor vehicle is sold. The decorative layer 15 may be a wood veneer 15 shown as a separate component from the base structure 14. The base structure 14 is formed in an arcuate section having a unique cross section. This cross section is provided with two 90-degree locking corner sections that are inclined forming a locking apex 17 on each side of the base structure 14. The pliable component 12 prior to assembly is pulled taut to a predetermined tension or force F by a clamping means (not illustrated) on the inner diameter or edge and on the outer diameter or edge. The clamping means holds the pliable component 12 similar to a drum head in a relatively tight fashion.

The underlying locking structure 16 has two complimentary channels 18 on each side of a raised contoured center portion 19. The contoured center portion 19 can be flat or rounded such that when assembled, the outer base structure 14 and the lower locking structure 16 can be affixed by the pins 13 or, as will be discussed later, in such a fashion that as the assembly is made the pliable component 12 is forced by the outer base structure 14 into the channels 18 provided in the lower locking structure 16 forming the two "v" shaped depression sections in the pliable component 12. The pliable component 12 when clamped prior to assembly is flat without the "v" shaped depressions. This is important because as the assembly is made the leather is stretched and by having the ends clamped or otherwise retained it is believed that the occurrence of wrinkles, puckering or other defects can be virtually eliminated. As the components 14, 16 are drawn together the pliable component 12 is stretched.

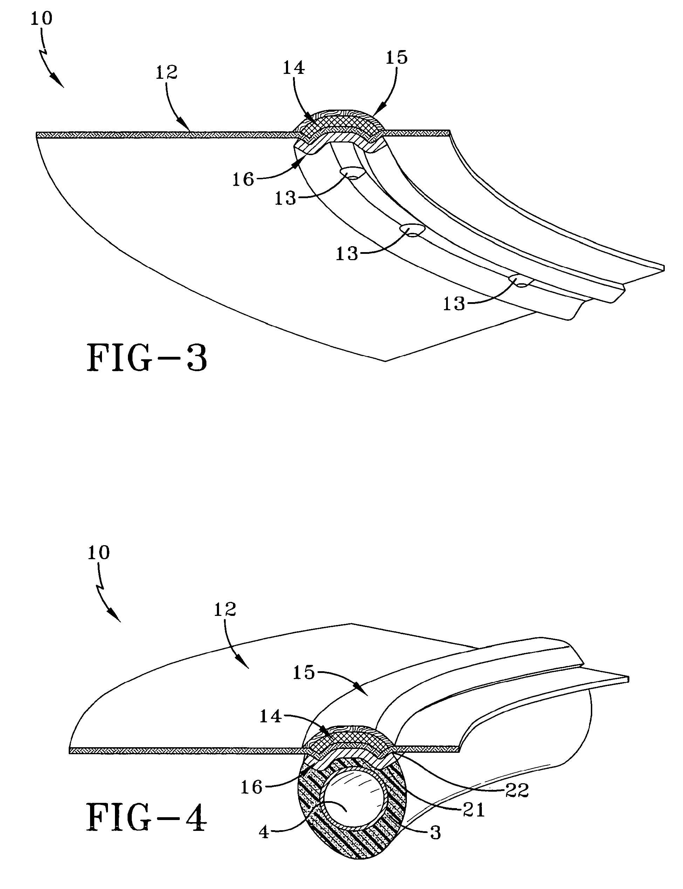

In Fig. 2 the outer base structure at the two apexes 17 forms a pair of primary locking corners that locks and pinches the pliable component 12 into position. The pliable component 12 is therefore securely retained in a non-slip fashion in the channels 18. The decorative layer 15 mounted onto the base structure 14 is in tight alignment with the leather because of the contour of the underlying locking structure 16. The locking structure 16 has the channels 18 located inward of the flanges 21 extending upwardly creating edges 22, 23 such that on assembly as shown in Fig. 4 the pliable component 12 can be wrapped around the secondary locking corner at edge 22. This creates a very sharp and physically resistive component wherein the pliable component when drawn tight can be stitched relying on the base structure 14 in combination with the locking structure 16 to provide a firm and rigid resistance upon assembly. This is particularly important when stitching the pliable component 12 onto the rim 4 of the steering wheel 2.

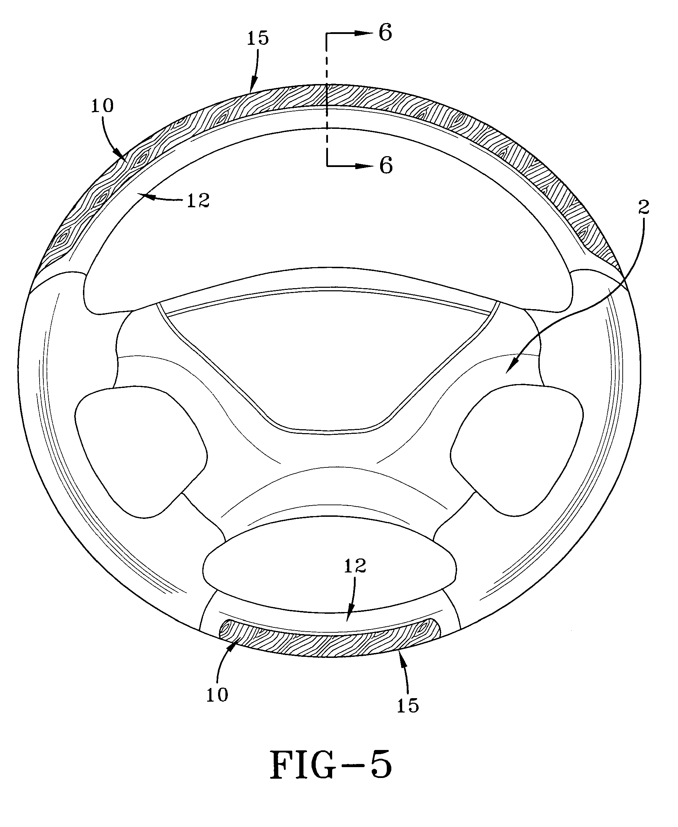

In Fig. 5 the assembly has a wood grain appearance. Two of the leather subassemblies 10 with pliable components 12 and decorative layers 15 are attached to this steering wheel 2 to make a final assembly.

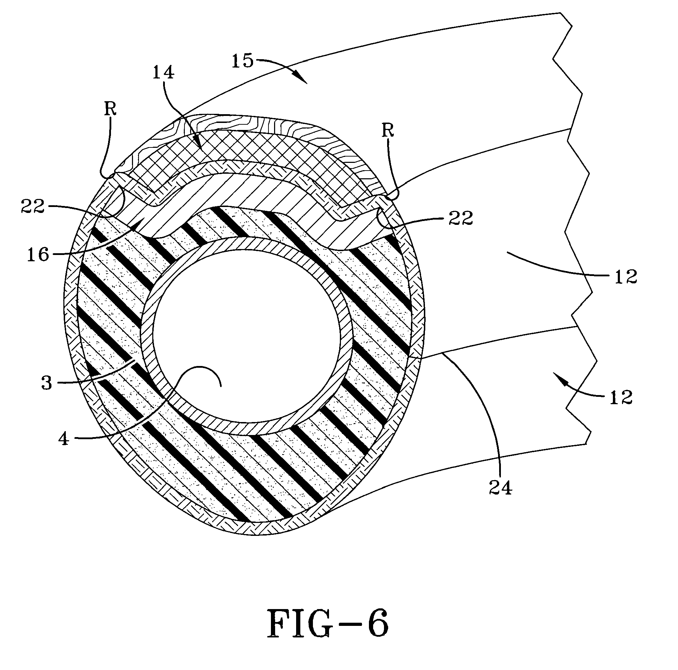

Fig. 6 shows the final assembly in greater detail. The stitch line 24 is shown on the interior of the steering wheel rim 4. The locking base structure 16 is shown wherein the pliable component 12 is securely and wrapped over the edge 22 such that the radius of curvature R of the pliable component 12 is kept at a minimum. This ensures that there is virtually no crevice. The decorative cover or layer 15 or base 14 can be slightly contoured along the edges such that the small amount of radius of curvature R can be accommodated for by the decorative layer 15 or the base structure 14. This is achieved by providing a slight concave radius of curvature R to complement the convex radius of curvature R that is formed in the pliable component 12 upon stitching. There is virtually no crevice for dirt or debris to collect in as is common in the prior art.

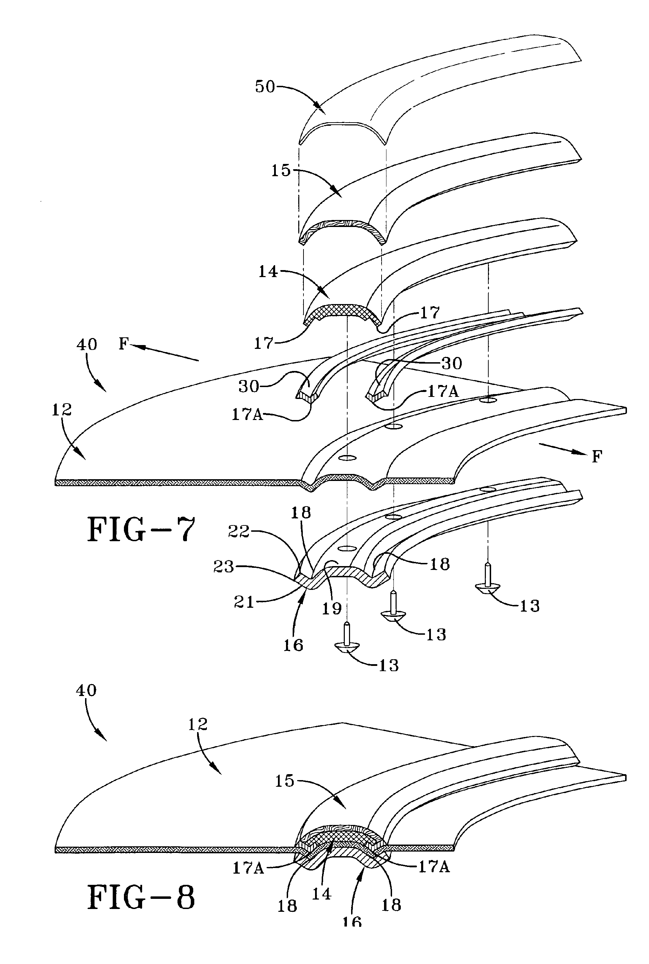

Figs. 7 - 12 show a second embodiment 40 according to the present invention. In this embodiment subassembly 40 is provided not only with a pliable component 12 and one or more decorative layers 15, but also an outer boundary ring 30 of chrome or shiny polished metallic or otherwise aesthetically appealing boundary 30. This provides a distinctive and complimentary look between the pliable component 12 and the decorative layer 15. The boundary 30 highlights the distinctive look and provides additional aesthetic appeal to the finished product.

Fig. 7 shows the second embodiment 40 in an exploded view. The pliable component 12 is held tight on the interior edges and the exterior edges. When the assembly 40 is made the underlying structure 16 with "v" channels 18 on each side is allowed to receive the pliable component 12 as the outer base structure 14 and the underlying boundary components 30 are forced into contact with the pliable component 12. The base structure 14 has the outer veneer decorative layer 15 as a separate component, but the base structure 14 could be printed with the decorative wood grain texture or any other decorative appearance such as highly polished lacquer or other printed or painted on surface. As the outer base structure 14 is brought into contact with the edge components 30, the entire assembly 40 is drawn tight such that the edge components 30 are retained in the "v" apex 17.

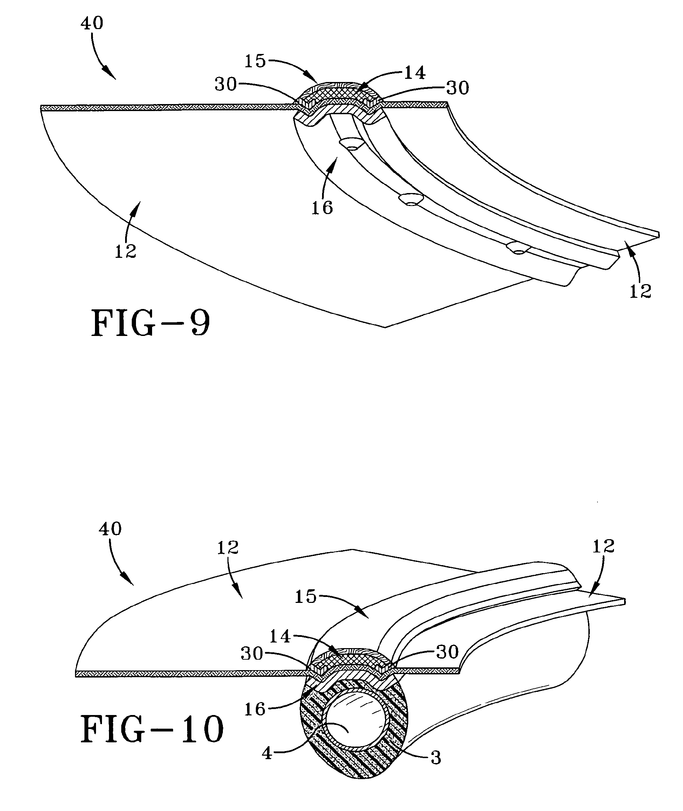

In Fig. 8 the "v" apex 17A is formed by the two outer boundary components 30. These boundary components 30 are retained to the base structure 14 and align with the outer veneer decorative layer 15 to make an outer subassembly. The apex 17A when brought into contact with the pliable component 12 presses the pliable component 12 and pinches it into the "v" channels 18 such that the pliable component is stretched upon assembly as the components are assembled the pliable component 12 is taut. No wrinkling or puckering can occur as in the first embodiment of the invention.

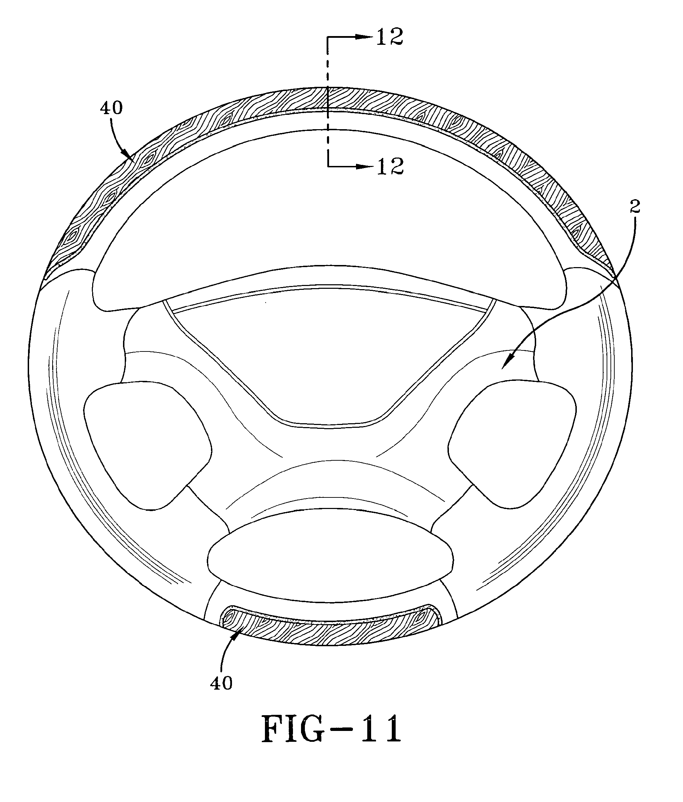

Fig. 9 is an under view of the subassembly 40. Fig. 10 shows the subassembly 40 mounted onto the polyurethane or otherwise soft exterior 3 of a portion of the rim 4. The rim 4 or soft exterior 3 is contoured to accept the base structure 14 such that no excessive deformation need occur on the rim 4. This provides a means of enabling the assembler to simply mount the subassembly 10, 40 onto the rim 4 in the proper location. The pliable component 12 is cut to a precise pattern, knowing the diameter of the rim 4 to which it will be mounted it is possible then that the subassembly 10, 40 can be folded or wrapped around the outer exterior of the rim 4 such that the seam edges meet at the stitch line 24.

Fig. 11 shows two of the subassemblies 40 attached to a steering wheel 2 similar to the way the subassemblies 10 were attached in Fig. 5. In the second embodiment 40 the upper portion of the steering wheel subassembly 40 covers approximately 120 to 180 degrees and the lower subassembly 40 covers a quadrant of 60 to 90 degrees. The subassemblies substantially match the opening in the steering wheel.

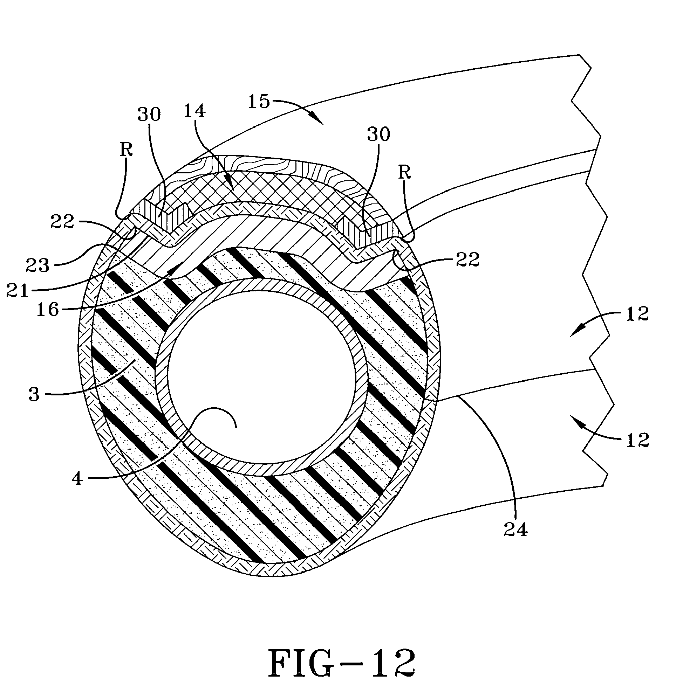

Fig. 12 shows the stitch line 24 provided on the interior of the rim 4. The stitch line 24 alternatively can be provided on the exterior. Normally the stitch line 24 is placed on the interior of the rim. The outer edge component 30 can be slightly contoured or have a slight curvature R at the exterior portion that matches the radius of the curvature R of the pliable component 12. The crevice is filled by the edge component 30 that provides a shiny boundary for the decorative layer 15 and the pliable component 12. There is a slight contour on the rim component when the boundary component 30 is made of plastic and is plated or otherwise highly polished to provide a distinctive look. Should metal boundary 30 be bent and formed this covering of the crevice will not be possible in an easy fashion and it is likely that there will be a small crevice occurring should a metal edge 30 be provided. In such a case it is important to note that the contour radius of the pliable component 12 is less than 2 mm radius of curvature when bent over the underlying edge 22 of the locking structure 16. This is important because in the prior art it is virtually impossible to achieve such a low radius of curvature when folded or pulled over the soft urethane foam 3. This is an advantage of the present invention over the prior art.

All of the components holding the pliable component 12 as a subassembly 10, 40 can be made of a polymer such that a distinctive appearance can be achieved at a minimal cost.

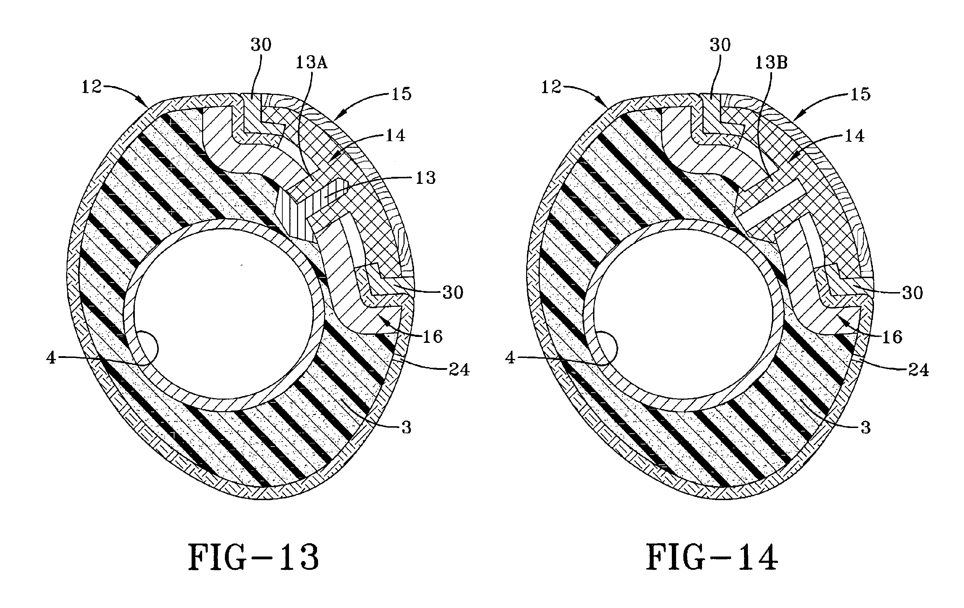

Alternative ways of mounting and securing the subassemblies 10, 40 to the steering wheel rim component are illustrated in Figs. 13 - 24.

Fig. 13 shows the outer base structure 14 with a cylindrical component 13A that extends into the underlying locking structure 16 such that they can be fixed together by a pin 13. The pliable component 12 is cut providing an opening to receive the cylindrical component 13A to make a secure attachment of the two components 14, 15 sandwiching the pliable component 12 between the outer component 14 and the locking structure 16 underlying the pliable component 12.

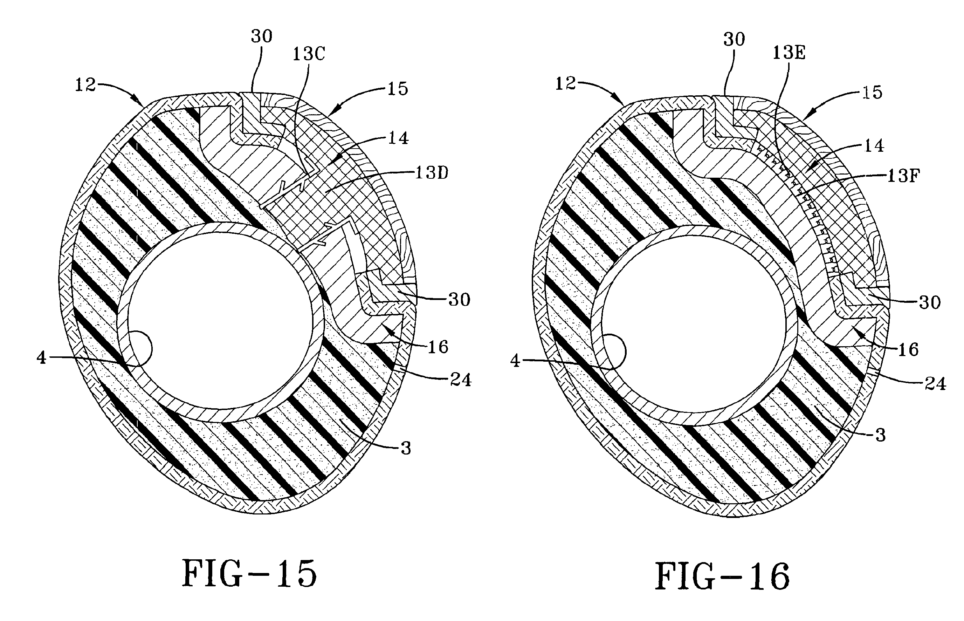

Fig. 14 shows that the cylindrical appendage 13A can have a self-locking head 13B such that upon assembly they are simply snapped together to retain sufficient pressure to crimp the pliable component 12 between the outer base structure 14 and the locking structure 16.

Fig. 15 shows that the base structure 14 can use a mechanical locking means 13C such that the cylindrical portion 13D of the outer base structure 14 can have the component 13C adhered to it as a locking means on the outer cylindrical portion 13D. When the two assemblies 14, 15 are forced together the locking means 13C engages into the underlying locking structure 16 and the appendages on 13C create locking interference such that the components cannot be easily separated. Sufficient pressure is required to ensure that the pliable component 12 cannot pull out from the interlock being created by the decorative edge components 30.

Fig. 16 shows that a Velcro® attachment can be provided such that the two components 14, 16 can be physically adhered by mechanical means using two Velcro® layers 13E, 13F, one on the locking structure 16 and a mating one on the outer base structure 14. This assembly may further include the use of glue or other adhesives.

In Figs. 13 - 16 the decorative layer 15 is positioned on the upper interior portion of the steering wheel rim 4. Assuming that the steering wheel center of axis is on the right hand of each of the figures the rim decorative component is on an upper portion. If one looks at each cross-sectional view where 12 o'clock is at the upper portion and 6 o'clock at the lower portion, 3 o'clock on the right portion and 9 o'clock on the left hand portion, then the decorative portion is positioned between 12 and 3 o'clock in each of these figures.

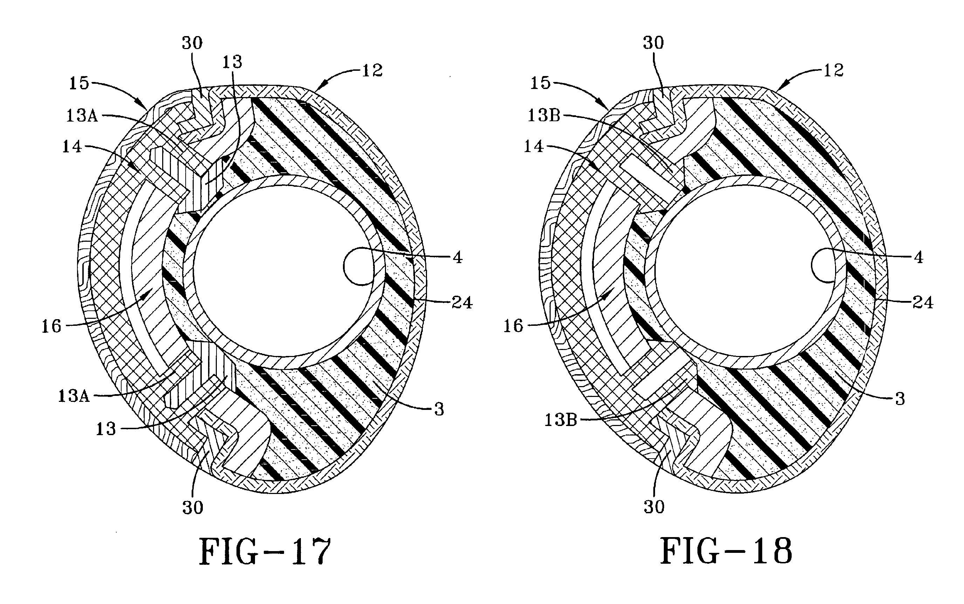

Fig. 17 shows that the outer base structure may include two or more cylindrical pin sections 13A offset from the center and closer to the locking means created by the edge 30 in such a fashion the pins 13 will be pressed into the outer base structure 14 and help retain the locking structure 16 in firm contact with the outer base structure 14.

Fig. 18 shows that the outer base structure may have the locking head arrangement 13B on each side, such that the two components 14, 15 can be stacked together forming the subassembly 40 wherein the base structure 14 is pressed into the locking structure 16 to make the subassembly 40.

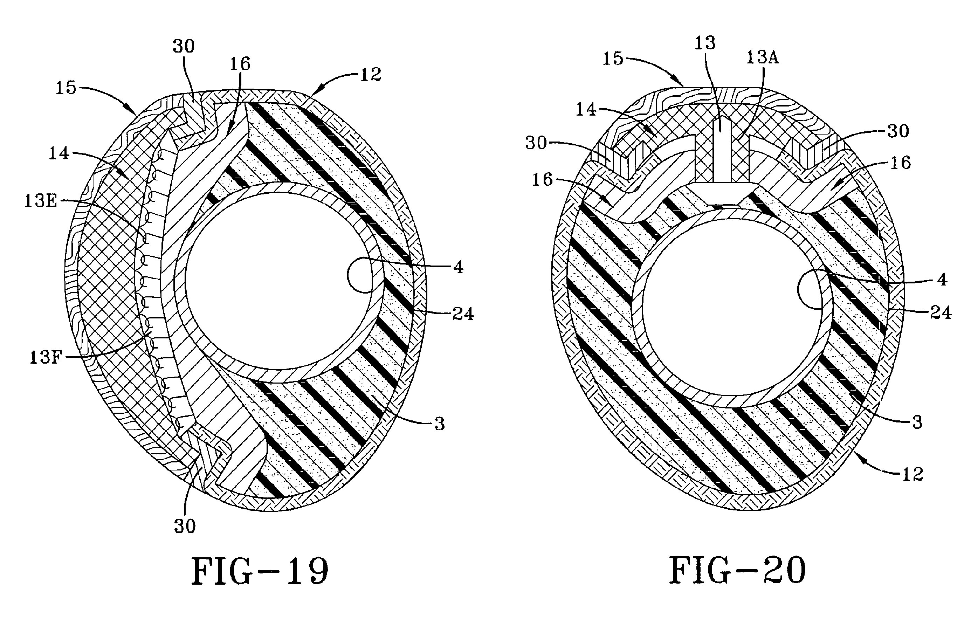

In Fig. 19 the base component 14 and the locking structure 16 are shown attached or affixed using Velcro® layers 13E, 13F as previously mentioned in an earlier embodiment. Velcro® can be used alone or in combination with adhesives such that a secure attachment can be made. If adhesives are utilized the subassembly is made such that the component is provided with a mandrel, press or otherwise a gluing fixture so that adequate pressure can be applied that the components do not loosen during normal use. In Fig. 19 no underlying urethane coating 3 is provided at the 9 o'clock position of the subassembly relative to the rim. The attachment is rigid at the 9 o'clock position making a firm feeling assembly whereas at the edges there is some urethane 3 providing a cushioning effect as the pliable component 12 initiates around the periphery of the rim 4 yielding a combination of the hard outer feel with a soft inner feel to the rim 4.

In Figs. 17-19 the decorative layer 15 is positioned between 6 o'clock and 12 o'clock approximately centered at the 9 o'clock position. In these embodiments, the decorative portions cover a large portion of the outer periphery of the rim 4. This means that they are outward of the center of axis of the rim 4 and the leather component 12 is stitched on the interior portion towards the center of axis of the rim 4.

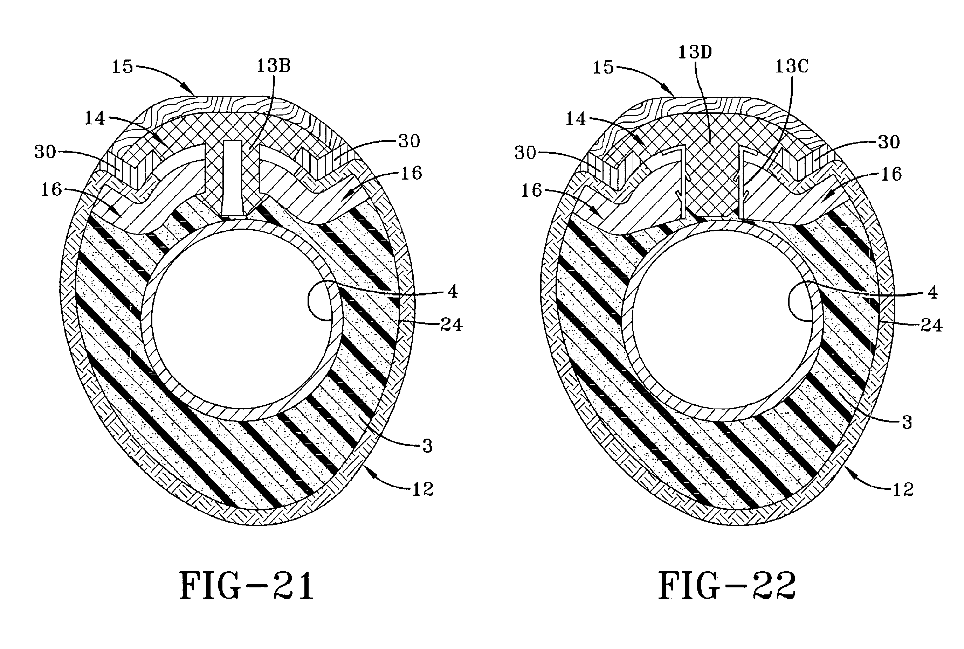

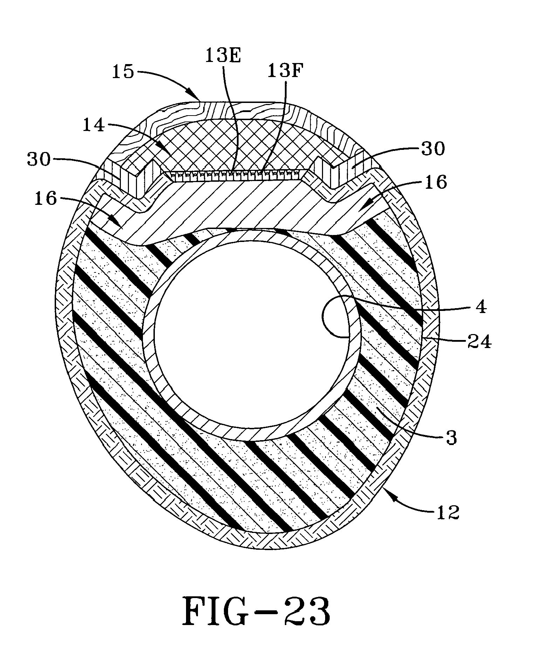

In Figs. 20 - 23 the decorative layer 15 is shown at the 12 o'clock position of the rim 4. In this position the decorative layer 15 is on top of the rim 4, in this fashion the subassembly 10, 40 can be laid directly on top of the rim 4 and can cover a small arcuate portion of the outer periphery of the rim 4 or in fact be provided as an annular ring 360 degrees around the rim 4. The locking structure 16 can be connected to the base structure 14 by a screw or pin 13 as shown in Fig. 20 or an adhesive or Velcro® 13E, 13F as shown in Fig. 23 or by a locking head 13B as shown in Fig. 21, or by a locking means 13C provided on the exterior of a cylindrical protruding component 13D on the base structure 14 that is received in an opening in the locking structure 16. In each of these cases the leather component 12 is cut or pierced to provide an opening such that the attaching means can pass through the pliable component 12.

In every illustrated assembly the locking structure 16 provides a trough or channel 18 with a "v" shape on each side such that either the decorative boundary component 30 or the base structure 14 can provide a sharp "v" shaped apex 17, 17A that can push the pliable component 12 into the trough or channel 18 forming a subassembly and pre-tensioning the pliable component 12. On assembly there will be no wrinkling or puckering as is common when these components are assembled directly onto the steering wheel 2 in the prior art manner.

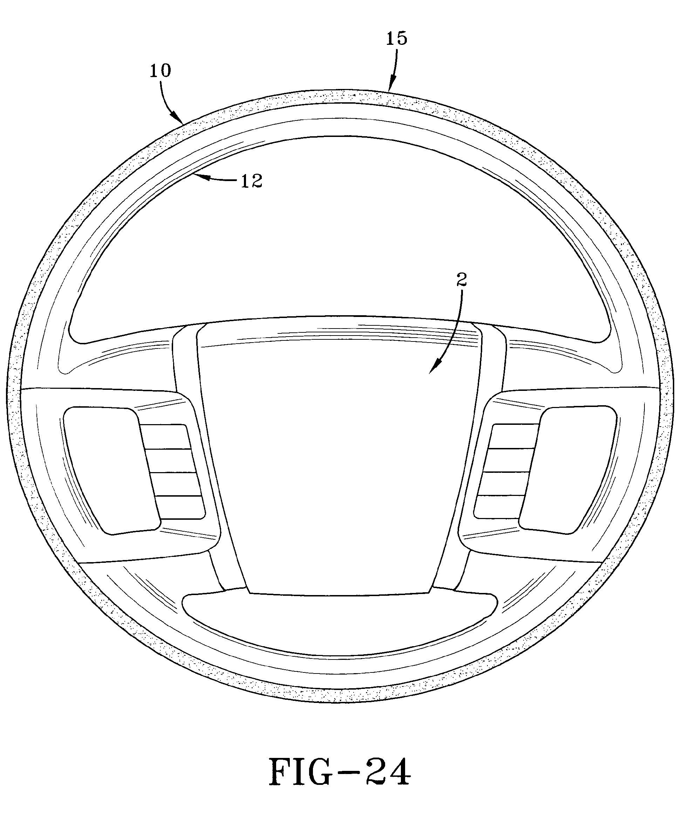

In Fig. 24 the subassembly 10 has no outer boundary 30 but could be provided with one. This feature is hard to achieve in prior are steering wheel assemblies, however, due to the unique nature of the method in which the subassembly 10, 40 is produced it is now easy to produce this feature.

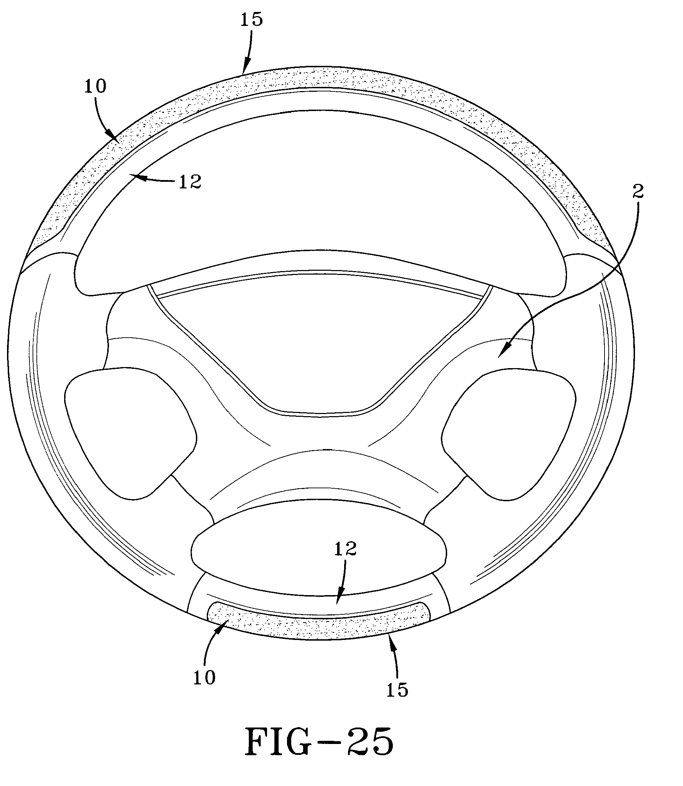

In Fig. 25 the subassemblies 10 are on the outer periphery and these components are best described in Figs. 17 - 19. These designs provide a distinctive appearance where the arcuate section extend circumferentially upwards as much as 180 degrees, but not further unless the decorative layer 15 is provided in two pieces with an abutting seam.

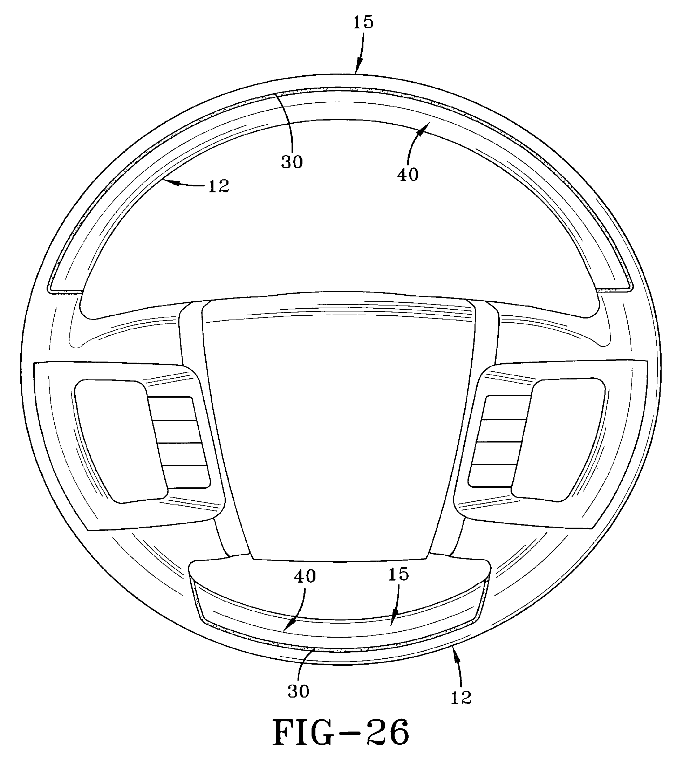

In Fig. 26 the decorative layer 15 is mounted on the interior of the rim 4 and in Fig. 26 a boundary 30 is shown.

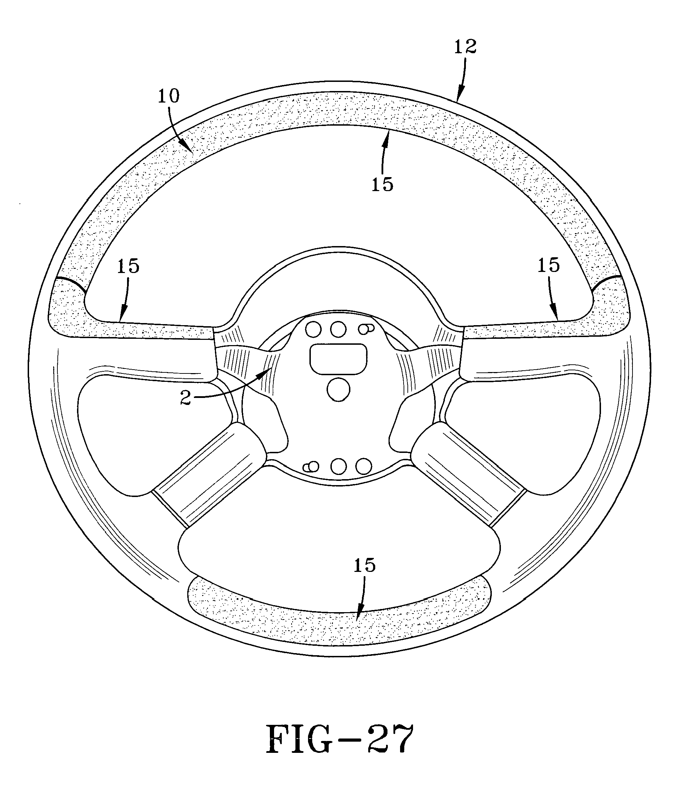

In Fig. 27 the subassembly 40 has the decorative layers 15 positioned at the top portion on the interior of the rim 4 and the bottom portion of the rim and extending on the spokes 5 of the rim 4. The decorative layer 15 have a butt or weld line on these components so the assembly can be completed and provide a decorative or wood grained type finish or other type of finish. The decorative layer 15 is shown as a texture or color different than that of the pliable component 12.

In each of the embodiments illustrated on a steering wheel assembly 2, the pliable leather component 12 is adhered to one or more decorative layers 15 on or part of the base structure 14 and one or more securing components or locking structures 16 in such a fashion to form a subassembly. The pliable component 12 has an outer edge and an interior edge that when wrapped on the steering wheel upon final assembly covers at least a portion of the article enveloped by the subassembly 10, 40. The wrapping can be accomplished on a number of motor vehicle components such as the steering wheel, seats, gear shift knobs, center consoles, window visors, arm rests, interior door coverings or any other passenger compartment in an automobile, aircraft, watercraft or train

The intermediate article of manufacture when used as a subassembly for wrapping on the outer portion of a steering wheel 2 may have the subassembly layer shaped as an arcuate section, a semi-annular section or a full annular section. The outer base structure 14 can be interposed between the outer decorative layer 15 and the pliable component 12, but on the exterior side of the pliable component 12 in such a fashion that the decorative layer 15 is a separate component from the outer base structure 14 as previously mentioned. The outer base structure 14 may include paint or other decorative layer 15 that is printed on or otherwise adhered to the exterior of the outer base structure 14.

The arcuate section, semi annular section or annular locking structure 16 is complimentary to the outer base structure 14. In other words whatever the length of the arcuate outer structure is the underlying locking structure preferably will match with the outer base structure. In the preferred embodiment this outer locking structure 16 is placed adjacent to the pliable component 12 on an interior side of this pliable component 12. The locking structure 16 is generally aligned with the base structure 14 and connected together by one or more securing means 13, 13A-13F. The securing means of the subassembly 10, 40 can be an adhesive attachment to both sides of the pliable component 12 passing through openings in the pliable component 12 to ensure that the base structure 14 and the locking structure 16 are securely affixed to each other. The securing means can be a Velcro® component 13E, 13F. If a Velcro® component is used additional adhesives or other components can be used as a securing means. One or more securing means can be used in combination. The securing means can include, screws, pins or equivalent fastening or locking means passing through the pliable component 12 to secure the outer base structure 14 to the locking structure 16.

A protective film or layer 50 can be applied to the exterior of at least the decorative layer 15 to prevent the outer peripheral surfaces of the decorative components from being scratched or otherwise marred prior to assembly. By providing this exterior protective film 50 as part of the subassembly, the assembler at final assembly can mount the component to the steering wheel and stitch or otherwise adhering the leather to the polyurethane coated rim 4 such that the concern over damaging the wood grain or simulated decorative layer 15 can be minimized. This protective layer 50 covering the decorative layer 15 can be left on the subassembly 10, 40 and even on the steering wheel 2 until the vehicle is prepared for delivery to the final customer.

In each of the applications of the invention one or more decorative border components 30 can be employed. The border components 30 are optional. A decorative border component 30 may be a polymer formed to fit along the edges of the outer base layer and provide the pinching, locking corners or "v" apexes 17A that press the pliable component 12 into channels 18 in the underlying locking structure 16.

All of the above subassemblies can be made using the following method of manufacture wherein leather, simulated leather or a leather equivalent wrap or covering subassembly 10, 40 is formed. The methods include the step of forming a piece of leather or leather equivalent to a predetermined shape or pattern and attaching one or more decorative components to the pliable component 12 and securing the formed pliable component 12 and one or more decorative components 15, 30 to form a subassembly prior to being attached to the underlying structure to be covered. The method of manufacturing the subassembly 10, 40 may include attaching a removable protective layer 50 over the exterior surfaces of one or more decorative components 15, 30. The method may further include the step of providing one or more openings in the cut piece of pliable component 12 such that the openings provide a space for securing the outer base layer 14 to the underlying locking structure 16. The method may further include securing the outer base structure 14 and the underlying locking structure 16 by the use of pins, screws, adhesives, Velcro® or other securing means such that the outer base structure 14 compresses and pre-tensions the pliable component 12 as it is secured between the outer base structure 14 and the underlying locking structure 16 in such a fashion that a slight pre-stretch occurs on the pliable component 12. Preferably the pliable component 12 is clamped at each interior and exterior edge such that the leather 12 is taut upon assembly, when assembled the pliable component 12 is then pressed into a pair of "v" troughs or channels 18 on the underlying locking structure 16 and pinched by a "v" apex 17, 17A on each edge of either the outer base layer 14 or the base structure 14 in combination with the boundary components 30. This pinching of the leather pre-stretches and secures the pliable component 12 in such a fashion that it is tightly secured. The method also includes folding or wrapping the subassembly around the outer rim 4 or spokes 5 of a steering wheel 2 such that the edge of the pliable component 12 has a radius of curvature R of less than 2 mm when wrapped around the underlying locking structure 16. This method insures that the crevice between the decorative layer 15 and the pliable component 12 is kept to a minimum. Preferably the radial contour or curvature R of the pliable component 12 is less than 2 mm more preferably 1.5 mm or less when so formed. The method further can include the step of adhering or bonding the subassembly to the rim or article to be covered. It is possible since the components can be formed of a polymer that the base structure 14 or alternatively the boundary components 30 that are plated with chrome, gold or other shiny material can be provided with a concave curvature R that is complimentary to the convex radius of curvature R of the leather when wrapped around the edge 22 of the locking structure 16. In this fashion the crevice or opening is actually filled by this contouring on the exterior surface of either the base structure 14 or the boundary component 30.

A benefit of the wood insert or decorative layer 15 being attached by the pliable component 12 to form a subassembly 10, 40 is that long hooks are not required to hold the assembly to the steering wheel rim as is common in prior art manufacturing of steering wheels. An armature occupying a greater percentage of the rim cross section can be accommodated if there are no hooks. Such rim sections offer advantages in fluid damper and other steering wheel applications that would otherwise be very difficult to be made with such aesthetically pleasing decorative elements.

The subassemblies 10, 40 may be provided in a kit suitable for covering one steering wheel. These kits enable the manufacturer to reduce overall inventories of covered steering wheels to a minimum. By providing these subassembly kits the manufacturer can provide a wide selection of color and style options that otherwise might be avoided. A common sized armature may have a wide variety of styles of coverings to choose from.

While shown primarily as a component for attaching to a steering wheel other uses of this type of subassembly are beneficial in almost any interior component of a vehicle where a decorative feature is required in combination with a leather, or simulated leather, component. There can be variations in methods of securing or attaching the underlying locking structure to the outer base structure according to the present invention.

## Claims

1. A method of making a decorative member for a vehicle component, the method comprising the steps of:
(a) making a decorative member as a subassembly (10, 40) of a vehicle component by:
(i) forming a pliable component (12) comprising leather, simulated leather or a leather equivalent to a predetermined shape;
(ii) attaching one or more decorative components (15, 30) to the pliable component (12); and
(iii) securing the pliable component (12) to a decorative component
(15, 30) prior to attaching the subassembly (10, 40) to an underlying structure of a vehicle component (2).

2. A method of making a decorative member for a vehicle component according to claim 1 further comprising the step of providing one or more openings in the pliable component (12); and covering the one or more openings by placing a decorative components (15) over or under the opening.

3. A method of making a decorative member for a vehicle component according to claim 1 or 2 further comprises clamping the pliable component (12) prior to attaching the decorative component (15, 30).

4. A method of making a decorative member for a vehicle component according to claim 3 further comprising the steps of tensioning the formed pliable component (12) by attaching an outer base structure (14) on an outer surface of the formed pliable component (12) and a locking structure (16) on an interior surface of the formed pliable component (12) and upon securing the outer base structure (14) to the locking structure (16) tensioning the formed pliable component (12) between channels (18) on the locking structure by locking apexes (17) on the outer base structure(14).

5. A method of making a decorative member for a vehicle component according to of any of claims 1 - 4 further comprising the step of attaching a removable protective layer (50) over the exterior surfaces of the decorative component (15, 30).
